# EUROPÄISCHE PATENTSCHRIFT

(11) **EP 2 475 040 B1**
(45) Veröffentlichungstag und Bekanntmachung des Hinweises auf die Patenterteilung: **18.04.2018**
(21) Anmeldenummer: 12150268.6
(22) Anmeldetag: 05.01.2012
(51) Int. Cl.: H01M 8/248, H01M 10/04, H01M 2/10

(54) **GALVANIKZELLENEINHEIT**
GALVANIC CELL UNIT
UNITÉ DE CELLULES GALVANIQUES

(30) Priorität: 05.01.2011 DE 202011001161 U
(43) Veröffentlichungstag der Anmeldung: 11.07.2012
(73) Patentinhaber: Reinhold Wesselmann GmbH, 49688 Lastrup / Nieholte (DE)
(72) Erfinder: Wesselmann, Reinhold, 49688 Lastrup/Nieholte (DE)
(74) Vertreter: Eisenführ Speiser

(56) Entgegenhaltungen:
- EP-A2- 0 082 516
- EP-B1- 0 329 161
- WO-A1-99/27602
- WO-A2-02/09216
- JP-A- 2001 093 564
- US-A1- 2004 202 917

## Beschreibung

Die vorliegende Erfindung betrifft eine Galvanikzelleneinheit mit einem Galvanikzellenpaket zur Erzeugung elektrischer Energie, welches eine Mehrzahl von aufeinandergestapelten Elektrodenblechen und Membranen aufweist, und mit zwei Abschlusseinheiten, welche jeweils eine Druckplatte oder Membran zur Druckbeaufschlagung des Galvanikzellenpakets aufweisen und beidseitig des Galvanikzellenpakets angeordnet und zur Abstützung gegenüber der jeweiligen Druckplatte aneinander befestigt sind,einem Druckkissen zur Übertragung einer Dichtkraft auf das Galvanikzellenpaket mittels einer der beiden Druckplatten oder Membranen, wobei das Druckkissen in der entsprechenden Abschlusseinheit, welche diese eine Druckplatte aufweist, angeordnet ist und zur Aufnahme eines druckbeaufschlagten Fluids eingerichtet ist und das Druckkissen einen Druckraum zur Aufnahme des druckbeaufschlagten Fluids aufweist und die Abschlusseinheit einen Strömungskanal zum Einlass von druckbeaufschlagtem Fluid in den Druckraum und vorzugsweise zum Auslass von druckbeaufschlagtem Fluid aus dem Druckraum aufweist,wobei der Druckraum galvanikzellenseitig von mehreren Kolben begrenzt und dazu eingerichtet ist, mittels Druckbeaufschlagung eine Kraft auf die mehreren Kolben in Richtung des Galvanikzellenpakets aufzubringen,dadurch gekennzeichnet, dass innerhalb der zwei Abschlusseinheiten jeweils ein Druckkissen zur Übertragung einer Dichtkraft auf das Galvanikzellenpaket angeordnet ist, wobei eines der Druckkissen ein druckbeaufschlagtes Fluid beinhaltet und das andere Druckkissen nicht mit einer äußeren Druckquelle in Fluidkommunikation steht. Im Rahmen dieser Erfindung wird im Folgenden unter dem Begriff Galvanikzelle ein einzelnes, kleinstes Element zur Erzeugung elektrischer Energie verstanden. Der Begriff Galvanikzellenpaket wird verstanden als eine Einheit, vorzugsweise Stapelung von mehreren solchen Galvanikzellen. Eine Galvanikzelleneinheit wiederum umfasst zumindest ein solches aus mehreren Galvanikzellen bestehendes Galvanikzellenpaket und die diese(s) umgebenden Bauteile zur Abdichtung, Fixierung und Verteilung.

Galvanikzelleneinheiten der vorstehend genannten Art werden zur Erzeugung elektrischer Energie eingesetzt. Der Vorgang der Erzeugung elektrischer Energie ist weitgehend bekannt. Typischerweise werden mehrere einzelne Galvanikzellen zu sogenannten Stacks aus aufeinandergestapelten Elektrodenblechen und Membranen aneinander zu einem Galvanikzellenpaket aufgereiht. Unter einem Elektrodenblech ist hierbei im Sinne dieser Beschreibung und der Ansprüche ein plattenförmiger Körper zu verstehen, der aus metallischen oder nicht-metallischen Werkstoffen ausgebildet sein kann.

Die Erfindung betrifft insbesondere eine solche Galvanikzelleneinheit, welche als galvanische Zelle eine Brennstoffzelle vorsieht. In einer in der einschlägigen Fachliteratur extensiv beschriebenen elektrochemischen Reaktion wird ausgehend von einem Brennstoff und einem Oxidationsmittel, im Fall der Wasserstoff-/Sauerstoff-Brennstoffzelle durch die Reaktion von Wasserstoff und Sauerstoff Strom erzeugt. Die Reaktion erfolgt, sobald ein elektrischer Kontakt zwischen den beiden Elektroden hergestellt ist. Es stellt sich zwischen den Elektroden ein elektrochemisches Potential ein, worauf ein Strom fließen kann. Der Brennstoff, z. B. Wasserstoff, diffundiert an der Anode zu einer aktiven Elektrodenschicht, wo ein Katalysator, beispielsweise Platin, den Brennstoff in Ionen (Protonen) und Elektronen zerlegt. Die Ionen diffundieren durch die zwischen den Elektroden angeordnete Membran zur Kathode, während die Elektronen durch einen externen Stromkreis fließen. An der Kathode wird zugeführtes Oxidationsmittel (Sauerstoff) mit den zu der Kathode diffundierten Ionen und Elektronen katalysiert.

Die Erfindung betrifft alternativ eine solche Galvanikzelleneinheit, welche als galvanische Zelle eine Redox-Flow-Zelle vorsieht. Während die Brennstoffzelle ein Energiewandler ist, wirkt die Redox-Flow-Zelle ein Energiespeicher. Der grundsätzliche Aufbau der Redox-Flow-Zelle ähnelt dem Aufbau einer Brennstoffzelle und ist bekannt.

Ein Erfordernis zum Betrieb einer Galvanikzelleneinheit ist die absolute Gasdichtheit der Zelle bzw. des Galvanikzellenpakets, um beispielsweise im Fall der Brennstoffzelle das Austreten von Brennstoff und/oder Oxidationsmittel zu verhindern und im Fall der Redox-Flow-Zelle den Übertritt von Oxidations- und/oder Reduktionsmittel. Im Stand der Technik wird diese Gasdichtheit dadurch erreicht, dass die verschiedenen plattenartigen Bauteile der Stacks bzw. des Galvanikzellenpakets zwischen zwei Abschluss-Einheiten verspannt werden. Die beiderseitig des Galvanikzellenpakets angeordneten Abschlusseinheiten werden mittels Spannmitteln, in der Regel Bolzenverbindungen, gegeneinander verspannt. Hierdurch wird eine Presskraft auf das Galvanikzellenpaket ausgeübt.

Nachteilig an diesem Aufbau von Galvanikzelleneinheiten mit Galvanikzellenpaketen ist, dass trotz hoher Materialstärken bei den zur Verspannung genutzten Bauteilen die maximale Höhe von Galvanikzellenpaketen durch Dichtigkeitsprobleme und ungleichmäßige Flächenpressungsverteilungen begrenzt wird. Hierdurch wird die Leistungsfähigkeit der Galvanikzelleneinheiten begrenzt, und zwar einerseits dahingehend, dass die spezifische Leistung als Ausgangsleistung bezogen auf das Gewicht der Galvanikzelleneinheit und andererseits die maximale Ausgangsleistung als Ergebnis der Anzahl von Galvanikzellen, die in einem Paket angeordnet werden können, limitiert ist.

Aus DE 1 930 116 ist ein Aufbau einer elektrochemischen Zelle bekannt, bei dem zwei Druckkissen dazu eingesetzt werden, um die Anordnung zusammenzupressen. Die Druckkissen bestehen aus Metall- oder Kunststofffolien. Problematisch an diesem Aufbau ist die Bereitstellung von Druckkissen, welche langfristig eine Dichtigkeit bei hohen Drücken gewährleisten. Aus EP0329161B1 ist ein hierzu fortenwickelter Aufbau bekannt, bei dem das Druckkissen durch ein Element gebildet wird, das durch Wärmedehnung eine Presswirkung erzielen soll. Problematisch ist hierbei allerdings die gezielte Einstellung einer bestimmten Presskraft und die geringen Längenänderungen durch die thermische Dehnung, welche hohe Anforderungen an die geometrischen Toleranzen stellen.

Aus DE10003528A1 ist ein Brennstoffzellenstack bekannt, bei dem ein inkompressibles Medium unter Druck gesetzt wird und einen Hohlraum zwischen einer Druckplatte und einem Kolben füllt. Der Kolben ist mittels eines O-Rings radial gegen die Druckplatte abgedichtet. Problematisch an dieser Anordnung ist eine zuverlässige Abdichtungswirkung, da durch die Druckeinwirkung sich insbesondere die Druckplatte verformen kann und hierdurch unerwünschte Leckagen oder Verkantungen verursacht werden.

Aus US 2004/0202917A1 ist ein Galvanikzellenpaket bekannt, welches eine einseitige Beaufschlagung mittels eines Druckkissens aufweist. Aus WO 99/27602 ist es bekannt, ein Galvanikzellenpaket mittels mehrerer durch das Galvanikzellenpaket hindurch ragender Zuganker beidseits mit Tellerfederpaketen zu komprimieren. Aus JP 2001/093564 ist eine Galvanikzellenanordnung bekannt, die einseitig mehrere hydraulisch betätigte Kolben zur Druckbeaufschlagung aufweist.

Die WO 99/27602 A1 offenbart ein weiteres alternatives Galvanikzellenpaket. Der Erfindung liegt die Aufgabe zugrunde, eine Galvanikzelleneinheit bereitzustellen, die eine höhere Leistungsfähigkeit ermöglicht.

Die Erfindung löst die ihr zu Grunde liegende Aufgabe durch eine Galvanikzelleneinheit der eingangs genannten Art nach Anspruch 1.

Der Erfindung liegt zunächst grundsätzlich die Erkenntnis zugrunde, dass die Umstände, welche die Leistungsfähigkeit von Galvanikzellen begrenzen, durch die Art und Weise der Abdichtung und insbesondere die Verspannung verursacht werden. Denn obwohl in dem Galvanikzellenpaket theoretisch auf jede einzelne Galvanikzelle die gesamte Presskraft wirkt, kann die Höhe des Galvanikzellenpakets nicht beliebig erhöht werden, da durch elastische oder plastische Verformungen eine zuverlässige Abdichtung nicht mehr gegeben ist.

Die Erfindung macht sich die Erkenntnis zu Nutze, dass innerhalb des Druckkissens aufgrund einer gleichmäßigen Verteilung des Fluids an jeder Stelle, mit welcher das Fluid in Kontakt steht, der gleiche Druck herrscht. Dieser Druck wird in Abhängigkeit von einer Fläche, die das Druckkissen begrenzt, in eine Presskraft übersetzt. Diese Presskraft wirkt auf das Galvanikzellenpaket. Die Presskraft ist dabei über die gesamte Fläche, auf welche der Druck des Druckkissens einwirkt, konstant verteilt. Es ist folglich irrelevant, ob die Abschlusseinheit ungleichmäßig mit der gegenüberliegend angeordneten Abschlusseinheit verspannt ist oder sich in Folge des Drucks des Druckkissens oder der Verspannung mit der gegenüberliegenden Abschlusseinheit verformt. Solange das Druckkissen intakt und druckdicht verschlossen ist, wird entlang der gesamten Wirkfläche des Druckkissens mit dem Galvanikzellenpaket die gleiche, gleichmäßig verteilte Flächenpressung aufgebracht. Diese gleichmäßige Flächenpressung bewirkt im Hinblick auf die die elektrochemische Reaktion, die internen Leitfähigkeiten eine effizientere Arbeitsweise der Galvanikzelleneinheit und für die statische Belastung eine günstigere Kraftverteilung unter Vermeidung von lokalen Belastungsspitzen. Besonders bevorzugt kann der Druck innerhalb des Druckkissens dabei mittels einer Regelungseinheit druckgeregelt sein, sodass Setzungserscheinungen in dem Paket oder anderen Bauteilen ohne Verlust der gleichmäßigen Flächenpressung und Dichtigkeit erfolgen können.

Die Druckplatte oder Membran wirkt im Sinne der Erfindung als Kraftübertragungselement zwischen dem druckbeaufschlagbaren Fluid einerseits und dem Galvanikzellenpaket andererseits. In bevorzugten alternativen Ausgestaltungen ist entweder eine Druckplatte oder eine Membran vorgesehen. Unter einer Druckplatte wird in dem

Zusammenhang ein plattenförmiges Bauteil verstanden, welches umfangsseitig eine Dicke aufweist, die eine mechanische Verformung jedenfalls infolge der Druckbeaufschlagung verhindert. Unter dem Begriff der Membran wird in diesem Zusammenhang eine dünne Platte oder Folie oder dergleichen verstanden, vorzugsweise mit einer Dicke in einem Bereich von 4 mm und geringer. Aufgrund der Kraftübertragung mittels des Druckkissens ist eine gleichmäßige Kraftverteilung auch dann erreichbar, wenn die Druckplatte als Membran ausgeführt ist. Durch die Ausführung der Druckplatte als Membran wird eine weitere Gewichts- und Platzbedarf-Reduktion erreicht. Sofern unter Bezugnahme auf die nachfolgenden Ausführungsbeispiele jeweils eine Druckplatte erwähnt ist, so ist in diesen Fällen grundsätzlich jeweils auch eine Ausführung in Form einer Membran oder Kombination aus Membran und Druckplatte als bevorzugte Alternative anzusehen.

Erfindungsgemäß wird der Druckraum der Galvanikzelleneinheit galvanikzellenseitig von mehreren Kolben begrenzt und ist dazu eingerichtet, mittels Druckbeaufschlagung eine Kraft auf die mehreren Kolben in Richtung des Galvanikzellenpakets aufzubringen. Es ist für einige Anwendungsfälle bevorzugt, nicht die vollständige Querschnittsfläche der Druckplatte in Form eines Kolbens durch den Druckraum zu belegen. Dies ist insbesondere dann der Fall, wenn die Druckplatte nicht als Kolben beweglich angeordnet sein soll, etwa weil zusätzliche Befestigungselemente oder Führungselemente an der Druckplatte vorgesehen sind, die nicht mit dem Druckraum in Verbindung kommen sollten, beispielsweise auf Grund von Dichtungsproblemen. In solchen Fällen ist es daher bevorzugt, mehrere, vorzugsweise voneinander unabhängige, Kolben mit Druck zu beaufschlagen. Gewisse Einschränkungen in der Gleichmäßigkeit der Druckbeaufschlagung auf das Galvanikzellenpaket können hingenommen werden, da im Gegenzug die Gestaltungsfreiheit der Anordnung und Ausprägung des Druckraums deutlich gesteigert wird.

In einer bevorzugten Weiterbildung wird eine Kombination aus einer Druckplatte und einer Membran vorgesehen, indem eine Druckplatte in der Abschlusseinheit angeordnet und mittels einer ringförmigen Membran an ihrem Umfang eingespannt ist. Demgemäß erfolgt eine Kraftübertragung auf die in sich starre Druckplatte, die beweglich von der Membran gehalten wird.

Als druckbeaufschlagbares Fluid wird vorzugsweise ein hydraulisches Medium oder ein Gas vorgesehen. Das Galvanikzellenpaket ist vorzugsweise zylindrisch ausgebildet.

Alternativ ist das Galvanikzellenpaket polyederförmig ausgebildet. Hierdurch wird eine gute Stapelbarkeit gewährleistet.

Erfindungsgemäß ist innerhalb der zwei Abschlusseinheiten jeweils ein Druckkissen zur Übertragung einer Dichtkraft auf das Galvanikzellenpaket angeordnet, wobei jeweils das Druckkissen ein druckbeaufschlagtes Fluid beinhaltet. Wenngleich der erfindungsgemäße Gedanke bereits zum Tragen kommt, wenn nur eine der Abschlusseinheiten ein erfindungsgemäß ausgebildetes Druckkissen beinhaltet, ist es dennoch bevorzugt, in beiden Abschlusseinheiten ein Druckkissen vorzusehen, so dass die Gleichmäßigkeit der Druckbeaufschlagung auf das Galvanikzellenpaket von beiden Seiten optimiert wird.

Zudem ist erfindungsgemäß innerhalb der zwei Abschlusseinheiten jeweils ein Druckkissen zur Übertragung einer Dichtkraft auf das Galvanikzellenpaket angeordnet, wobei eines der Druckkissen ein druckbeaufschlagtes Fluid beinhaltet. Dabei beinhaltet das andere der Druckkissen ebenfalls ein Fluid, welches allerdings nicht mit einer äußeren Druckquelle in Fluidkommunikation steht und somit passiv, also drucklos ist, wenn das andere Druckkissen nicht unter Druck gesetzt ist Aufgrund der Befestigung der beiden Abschlusseinheiten aneinander wird infolge der gegenseitigen Abstützung der Abschlusseinheiten gegenüber den Druckplatten ein Druck in dem passiven Druckkissen erreicht, der unter Abzug etwaiger Reibverluste innerhalb des Galvanikzellenpakets, dem Druck im druckbeaufschlagten Druckkissen entspricht. Der apparative Aufwand zur Druckbeaufschlagung ist hierdurch reduziert.

Weiter vorzugsweise sind mehrere Galvanikzellenpakete in der Galvanikzelleneinheit seriell hintereinander angeordnet. Durch die Stapelung mehrerer Pakete hintereinander wird eine Bereitstellung größerer Mengen elektrischer Energie bei kompakter Bauform erreicht. Die mehreren Galvanikzellenpakete sind vorzugsweise jeweils zwischen zwei Abschlusseinheiten angeordnet. Alternativ ist es auch vorteilhaft, bei der seriellen Anordnung mehrerer Pakete nur die jeweils endseitigen Galvanikzellenpakete mit jeweils einer Abschlusseinheit abzustützen, um den Bauraum weiter zu reduzieren.

In einer weiteren bevorzugten Ausführungsform der erfindungsgemäßen Galvanikzelleneinheit weist das Druckkissen einen Druckraum zur Aufnahme des druckbeaufschlagten Fluids auf, und die Abschlusseinheit weist einen Strömungskanal zum Einlass von druckbeaufschlagtem Fluid in den Druckraum und vorzugsweise zum Auslass von druckbeaufschlagtem Fluid aus dem Druckraum auf. Der Druckraum ist vorzugsweise innerhalb der Abschlusseinheit ausgebildet, und der Strömungskanal erstreckt sich vorteilhaft von dem Druckraum ausgehend durch die jeweilige Abschlusseinheit hindurch nach außen. Der Strömungskanal ist vorzugsweise mittels eines druckdicht verschließbaren Ventils begrenzt. Mittels des Strömungskanals wird vorzugsweise nach erfolgter Montage der Abschlusseinheiten beidseitig des Galvanikzellenpakets ein druckbeaufschlagbares Fluid, beispielsweise ein hydraulisches Medium oder Gas in den Druckraum eingeleitet oder vor der Demontage der Abschlusseinheiten aus dem Druckraum entfernt. Der Vorteil der vorliegenden Erfindung ist in diesem Zusammenhang auch darin zu sehen, dass die Abschlusseinheiten zunächst ohne Erzeugen einer besonders hohen Spannkraft aneinander montiert werden können auf beiden Seiten des Galvanikzellenpakets, wobei es auch nicht auf die exakt gleichmäßige Verteilung der Spannkraft entlang der verschiedenen vorzugsweise am Umfang verteilten Spannmittel der Abschlusseinheiten vorgesehenen Spannmittel ankommt. Die Presskraft wird erst nachträglich durch Einfüllen von Druckmittel in den Druckraum durch den Strömungskanal aufgebracht.

In einer weiteren bevorzugten Ausführungsform ist die Druckplatte angrenzend an das Galvanikzellenpaket angeordnet, und die Abschlusseinheit weist eine äußere Deckplatte auf, wobei der Druckraum zwischen der Druckplatte und der äußeren Deckplatte angeordnet und mittels Dichtelementen abgedichtet ist. Dadurch, dass die gleichmäßige Druckbeaufschlagung des Galvanikzellenpakets gemäß der vorliegenden Erfindung nicht von der Steifigkeit der Abschlusseinheit abhängt, ist die äußere Deckplatte bevorzugt mit im Vergleich zum Stand der Technik dünner Wandstärke ausgebildet. Die Wandstärke ist vorzugsweise derart gewählt, dass die Deckplatte in drucklosem Zustand des Druckkissens formstabil ist und sich aufgrund ihres Eigengewichts nicht verformt, und bei Druckbeaufschlagung des Druckkissens lediglich elastisch verformbar ist. Vorzugsweise tritt infolge der Druckbeaufschlagung eine elastische Verformung in einem Bereich von 30% bis 80% der Streckgrenze des Materials der Deckplatte auf, vorzugsweise bei einer Druckbeaufschlagung von bis zu 20 bar. Bei anderen Ausführungsformen ist es bevorzugt, dass diese Streckgrenzen bei einer Druckbeaufschlagung von 20 bar oder mehr nicht überschritten werden.

Die Druckplatte und die äußere Deckplatte begrenzen vorzugsweise den Druckraum und sind gegeneinander druckdicht ausgebildet.

Eine bevorzugte erfindungsgemäße Galvanikzelleneinheit weist einen Förderkreislauf zur Zirkulation des druckbeaufschlagten Fluids durch den Druckraum hindurch auf. Vorzugsweise sind in dem Förderkreislauf Mittel zur Kühlung und/oder Heizung des druckbeaufschlagten Fluids vorgesehen. Auf diese Weise wird mittels des druckbeaufschlagten Fluids Wärme zu- oder abgeführt, wodurch optimale Temperaturbedingungen für den Betrieb der Galvanikzelle gewährleistet sind. Optional sind in dem Förderkreislauf und/oder an der Abschlusseinheit der Galvanikzelleneinheit Mittel zur Temperaturmessung vorgesehen, die mittels einer elektronischen Steuerung mit den Mitteln zur Kühlung und/oder Heizung so zusammenwirken, dass bei Über- oder Unterschreiten eines vorbestimmten Grenzwertes eine Abkühlung oder Erhitzung des druckbeaufschlagten Fluids erfolgt.

Die Druckplatte weist vorzugsweise einen oder mehrere Versorgungsanschlüsse zur Versorgung der Galvanikzelleneinheit mit Reaktionsmaterial wie beispielsweise Oxidationsmittel, Reduktionsmittel oder Brennstoff auf. Vorzugsweise ist im Fall einer Brennstoffzelle als Brennstoff Wasserstoff sowie als Oxidationsmittel Sauerstoff vorgesehen. Die Druckplatte ist vorzugsweise mit einer Wandstärke dimensioniert, die die Aufnahme des Versorgunganschlusses ermöglicht. Aufgrund der erfindungsgemäßen Ausbildung der Galvanikzelleneinheit mit Druckkissen sind an die Steifigkeit der Druckplatte und somit an deren Wandstärke keine gesteigerten Voraussetzungen geknüpft. Die Druckplatte muss lediglich ausreichend dimensioniert sein, um die Versorgungsanschlüsse aufzunehmen und dabei der Druckbeaufschlagung durch den Druckraum standhalten zu können.

In einer vorteilhaften Weiterbildung der Galvanikzelleneinheit ist der Druckraum galvanikzellenseitig von der Druckplatte begrenzt und dazu eingerichtet, mittels Druckbeaufschlagung eine Kraft auf die Druckplatte in Richtung des Galvanikzellenpakets aufzubringen. Die Druckplatte übernimmt in dieser Ausführungsform die Funktion eines einzelnen Kolbens, welcher mittels des Druckraumes druckbeaufschlagt wird und eine der Querschnittsfläche des Kolbens entsprechende Kraft auf das Galvanikzellenpaket aufbringt. Vorzugsweise ist die als Kolbenfläche fungierende Querschnittsfläche der Druckplatte unmittelbar in Kontakt mit dem Galvanikzellenpaket und erstreckt sich über die gesamte Fläche einer Kontaktfläche mit dem Galvanikzellenpaket. Auf diese Weise wird die Gleichmäßigkeit der Kraftübertragung auf das Galvanikzellenpaket optimiert.

Der Druckraum weist bevorzugt mehrere den Kolben zugeordnete Abschnitte auf, die fluidleitend miteinander verbunden sind. Es liegt gemäß dieser Ausführungsform kein einzelner großer Druckraum mehr vor, sondern verschiedene kleinere, den jeweiligen Kolben in Form und Größe vorzugsweise entsprechende Abschnitte. Dadurch, dass die einzelnen Abschnitte aber fluidleitend miteinander verbunden sind, herrscht trotz der getrennten Anordnung der Abschnitte voneinander in allen Abschnitten der gleiche Fluiddruck. Besonders bevorzugt ist es, wenn die einzelnen Abschnitte des Druckraums auf Kolben gleicher Größe treffen, so dass die von den einzelnen Kolben auf das Galvanikzellenpaket aufgebrachte Kraft jeweils gleich ist.

In bevorzugten alternativen Ausführungsformen sind die mehreren Kolben innerhalb korrespondierender Ausnehmungen der äußeren Deckplatte und/oder einer Kolbenplatte angeordnet. Dasjenige Bauteil, in welchem die Kolben vorzugsweise beweglich und geführt angeordnet sind, ist nach den konstruktiven Anforderungen an das Layout der Abschlusseinheit anzupassen. Wird eine besondere dünne äußere Deckplatte angestrebt, ist es von Vorteil, die Kolben innerhalb einer Kolbenplatte anzuordnen.

Es ist weiterhin besonders bevorzugt, dass jeder der mehreren Kolben lose auf einer Druckübertragungsplatte aufliegt, die zwischen dem Galvanikzellenpaket und den Kolben angeordnet ist oder dass jeder der mehreren Kolben innerhalb einer auf dem Galvanikzellenpaket aufliegenden Druckübertragungsplatte angeordnet sind und lose auf einer Deckplatte aufliegen, die in Bezug auf die Druckübertragungsplatte gegenüberliegend zum Galvanikzellenpaket angeordnet ist. Durch diese Anordnungsweise wird einer Undichtigkeit und Verkantung der Kolben infolge von druckbedingten Verformungen wirksam entgegengewirkt. Unter einem losen Aufliegen ist hierbei zu verstehen, dass die Kolben von der Druckübertragungsplatte mechanisch entkoppelt sind, also insbesondere nicht einstückig mit dieser ausgebildet sind. Durch diese Ausgestaltung kann jeder Kolben einzeln sich relativ bewegen oder relativ zur Längsachse des Galvanikzellenpakets kippen. Die Kolben können daher einer Verformung im Bereich der Abschlusseinheit, beispielsweise einer Verformung einer Zylinderplatte, welche die Druckräume ausbildet und die Kolben aufnimmt, individuell und unabhängig voneinander folgen, sodass sowohl eine Verklemmung der Kolben als auch eine Undichtigkeit im Dichtungsbereich der Kolben zuverlässig auch dann verhindert wird, wenn aufgrund der Druckkraft eine Verformung auftritt. Die Ausgestaltung ermöglicht daher eine besonders materialsparende und leichtgewichtige Ausführungsform des Brennstofffzellenpakets. Die Kolben sind dabei vorzugsweise auch nicht untereinander mechanisch gekoppelt. Die Kraftübertragung erfolgt daher von dem Kolben auf die Druckübertragungsplatte durch eine Flächenkraft im Kontaktbereich zwischen Kolben und Druckübertragungsplatte. Der Kolben kann in diesem Kontaktbereich plan oder leicht gewölbt ausgebildet sein. Grundsätzlich ist bei diesen beiden alternativen Ausführungsformen entweder eine Kraftübertragung auf das Galvanikzellenpaket von diesem ausgehend über die Druckübertragunsgplatte, die darauf aufliegenden Kolben, den Druckraum und schließlich die Deckplatte bei der ersten Variante oder über die Druckübertragunsgplatte, den Druckraum, die in der Druckübertragungsplatte angeordneten Kolben und schließlich die von den Kolben lose kontaktierte Deckplatte bei der zweiten Variante vorgesehen. Dabei ist bei der zweiten Variante ionsbesondere vorteilhaft, dass die Kolben in Zylinderbohrungen in der Druckübertragungsplatte angeordnet sind und daher nicht durch im Betrieb auftretende Verformungen oder Wölbungen der Deckplatte in ihrer freien Beweglichkeit in diesen Zylinderbohrungen gehindert werden.

Die erfindungsgemäße Galvanikzelleneinheit wird vorteilhaft dadurch weitergebildet, dass die den Kolben zugeordneten Abschnitte des Druckraums mittels mindestens einer Nut fluidleitend verbunden sind, welche in der äußeren Deckplatte und/oder in der Kolbenplatte ausgebildet ist. Es kann bevorzugt sein, eine einzige umlaufende Nut zum Zwischenverbinden der Abschnitte des Druckraums vorzusehen, oder auch mehrere separate Nuten, die sich jeweils beispielsweise vom Strömungskanal zu den Abschnitten des Druckraums hin erstrecken.

Gemäß einer weiteren vorteilhaften Ausführungsform der vorliegenden Erfindung ist den zwei Abschlusseinheiten ein vorzugsweise zylindrisch ausgebildeter Führungskörper zugeordnet, innerhalb dessen die Druckplatte der jeweiligen Abschlusseinheit geführt beweglich angeordnet ist. Der Führungskörper, welcher bevorzugt eine Hülse oder ein Ring sein kann, weist vorzugsweise Mittel zur Durchführung der die Abschlusseinheiten verbindenden Spannmittel bzw. Befestigungsmittel auf. Die Druckplatte ist bevorzugt innerhalb des Führungskörpers in Richtung des Galvanikzellenpakets bewegbar, um in Folge der Druckbeaufschlagung durch das Druckkissen zur Kraftübertragung auf das Galvanikzellenpaket zu dienen.

In einer alternativen Ausführungsform sind den zwei Abschlusseinheiten jeweils ein vorzugsweise zylindrisch ausgebildeter Führungskörper zugeordnet, innerhalb derer die Druckplatten der jeweiligen Anschlusseinheit jeweils geführt beweglich angeordnet sind, wobei die Führungskörper gegeneinander abgestützt sind. Die Führungskörper sind in dieser Ausführungsform vorzugsweise als Ringe ausgestaltet und weiter vorzugsweise mittels Passstiften, Stegen oder Rippen gegeneinander abgestützt.

Gemäß einer weiteren bevorzugten Ausgestaltung der Erfindung erstrecken sich der eine oder die mehreren Versorgungsanschlüsse durch den Druckraum hindurch und sind mittels eines Dichtelements gegen den Druckraum abgedichtet. Vorzugsweise ist der eine oder sind die mehreren Versorgungsanschlüsse an einer Stirnseite oder entlang des Umfangs der Druckplatte angeordnet. Diese Ausführungsform ist insbesondere bei Verwendung der einteiligen Druckplatte als einzelnem Kolben vorteilhaft.

In einer alternativen Ausführungsform erstrecken sich der eine oder die mehreren Versorgungsanschlüsse außerhalb des Druckraums und sind vorzugsweise an einer Stirnseite oder entlang des Umfangs der Druckplatte angeordnet. Wird eine Anordnung gewählt, in welcher der eine oder die mehreren Versorgungsanschluss sich nicht durch den Druckraum hindurch erstrecken, beispielsweise bei einer Ausgestaltung der vorliegenden Erfindung mit mehreren einzelnen Kolben, die nicht einen einzelnen großen Druckraum, sondern die Zuordnung mehrerer Abschnitte eines Druckraums bedingen, muss der eine bzw. müssen die mehreren Versorgungsanschlüsse nicht noch zusätzlich gegen den Druckraum abgedichtet werden. Die Gefahr, dass es zu einer Vermischung von Druckmittel und Oxidationsmittel bzw. Reduktionsmittel bzw. Brennstoff kommt, wird hierdurch weiter minimiert.

Vorzugsweise besteht die Druckplatte aus einem schwach wärmeleitenden Material. Infolge der auftretenden galvanischen Reaktion innerhalb des bzw. der Galvanikzellenpakete tritt eine Erwärmung der Galvanikzelleneinheit auf. Um einem sich hierdurch ergebenden Maßverzug oder Setzen der einzelnen Bauteile relativ zueinander entgegenzuwirken, wird gemäß einer bevorzugten Alternative die Wärmeübertragung von dem bzw. den Galvanikzellenpaketen auf die endseitig an ihnen angeordneten Druckplatten erschwert. Vorzugsweise liegt die spezifische Wärmeleitfähigkeit der Druckplatte in einem Bereich von 60 W/mk oder weniger. Weiter bevorzugt liegt die spezifische Wärmeleitfähigkeit der Druckplatte in einem Bereich von 15 W/mK oder geringer. Besonders bevorzugt liegt die spezifische Wärmeleitfähigkeit der Druckplatte in einem Bereich von 1 W/mk und geringer.

Gemäß einer alternativen bevorzugten Ausführung der Erfindung sind in die Druckplatte und/oder in die Deckplatte eine oder mehrere Medienleitungen eingebracht, welche zur Durchleitung eines Kühl- und/oder Heizmediums ausgebildet sind. Die Medienleitungen sind vorzugswiese gegenüber dem Druckraum abgedichtet.

In einer vorteilhaften Weiterbildung ist der Druckraum durch einen dünnwandigen Hohlkörper gebildet, vorzugsweise ballonförmig. Die Druckplatte ist vorzugsweise einstückig mit dem Hohlkörper ausgebildet, so dass die Druckplatte die galvanikzellenseitige Wandung des als Hohlkörper ausgebildeten Druckraums bildet.

In einer bevorzugten Ausführung der erfindungsgemäßen Galvanikzelleneinheit sind die aneinander befestigten Abschlusseinheiten mittels einer Spannkraft miteinander verspannt, wobei die Spannkraft mittels einer Druckänderung des druckbeaufschlagten Fluids einstellbar ist. Im laufenden Betrieb der Galvanikzelleneinheit ändert sich aufgrund von Temperaturänderungen und/oder infolge von Fertigungstoleranzen die vorab zwischen den Abschlusseinheiten erzeugte Spannkraft. Die Spannkraft muss zum Erhalt der Dichtwirkung innerhalb der Galvanikzelleneinheit möglichst konstant gehalten werden. Besonders vorteilhaft ist daher der in dem Druckkissen erzeugte Druck des druckbeaufschlagten Fluids in Abhängigkeit der Temperatur einstellbar.

Weiter vorzugsweise ist ein Druckregelventil fluidleitend mit dem Druckkissen verbunden, vorzugsweise in dem Strömungskanal oder dem Förderkreislauf angeordnet ist, und das Druckregelventil zur Minderung und/oder Erhöhung des Drucks innerhalb des Druckkissens, insbesondere des Druckraums wirkt Mit dieser Ausführungsform kann einerseits eine Druckregelung zur Herstellung eines Konstanten Druckniveaus innerhalb des Druckkissens auch bei Setzungserscheinungen erreicht werden, insbesondere mittels einer elektronischen Druckregeiungssteuerung, weiche den Druck erfasst und das Druckregelventil ansteuert. Die elektronische Steuerung wirkt vorzugsweise mit Mitteln zur Temperaturmessung und/oder Mitteln zur Messung der Spannkraft derart zusammen, dass bei Unterschreiten eines vorbestimmten Grenzwerts der gemessenen Spannkraft oder bei Über- bzw. Unterschreiten eines vorbestimmten Grenzwertes der gemessenen Temperatur der Druck innerhalb des Druckkissens zum Erhalt der erforderlichen Dichtwirkung bzw. gleichmäßigen Flächenpressung angepasst wird. Ebenfalls kann mittels des Druckregelventils der Druck gezielt in Abhängigkeit von Temperatur, Mediendruck oder dergleichen angehoben oder abgesenkt werden, um die Betriebsbedingungen der Brennstoffzelle an solche Einflüsse anzupassen und einen maximal effizienten und sicheren Betrieb sicherzustellen. Diese Druckregel-Funktion kann dabei sowohl ohne eine Zirkulation des Druckmediums als auch mit einer solchen Zirkulation innerhalb des Druckkissens realisiert sein.

Die Erfindung löst die ihr zugrunde liegende Aufgabe zudem bei einer Abschlusseinheit für eine Galvanikzelleneinheit der eingangs genannten Art, wobei die Abschlusseinheit eine Druckplatte zur Druckbeaufschlagung eines Galvanikzellenpakets der Galvanikzelleneinheit aufweist, zur Abstützung der Druckplatte einseitig an dem Galvanikzellenpaket anordenbar und an einer gegenüberliegend an dem Galvanikzellenpaket anordenbaren Abschlusseinheit befestigbar ist, indem die Abschlusseinheit ein Druckkissen zur Übertragung einer Dichtkraft auf das Galvanikzellenpaket mittels der Druckplatte aufweist, wobei das Druckkissen zur Aufnahme eines druckbeaufschlagten Fluids eingerichtet ist.

Die Abschlusseinheit ist vorzugsweise wie vorstehend im Zusammenhang mit der erfindungsgemäßen Galvanikzelleneinheit erörtert weitergebildet.

Im Folgenden wird die Erfindung anhand bevorzugter Ausführungsformen und unter Bezugnahme auf die beiliegenden Figuren näher beschrieben. Hierbei zeigt:
- Figur 1: eine Querschnittsansicht der erfindungsgemäßen Galvanikzelleneinheit in einer bevorzugten Ausführungsform;
- Figur 2: eine Seitenansicht der Galvanikzelleneinheit aus Figur 1;
- Figur 3: eine Querschnittsansicht einer erfindungsgemäßen Galvanikzelleneinheit in einer alternativen Ausführungsform;
- Figur 4: eine Seitenansicht der erfindungsgemäßen Galvanikzelleneinheit nach Figur 3;
- Figur 5: eine Seitenansicht der erfindungsgemäßen Galvanikzelleneinheit in einer weiteren alternativen Ausführungsform;
- Figur 6: eine Querschnittsansicht der erfindungsgemäßen Galvanikzelleneinheit nach Figur 5;
- Figur 7: eine weitere Querschnittsansicht der erfindungsgemäßen Galvanikzelleneinheit nach Figur 5 und 6;
- Figur 8: eine Detailansicht der Querschnittsansicht aus Figur 7, und
- Figur 9: eine Querschnittsansicht der erfindungsgemäßen Galvanikzelleneinheit in einer weiteren bevorzugten Ausführungsform

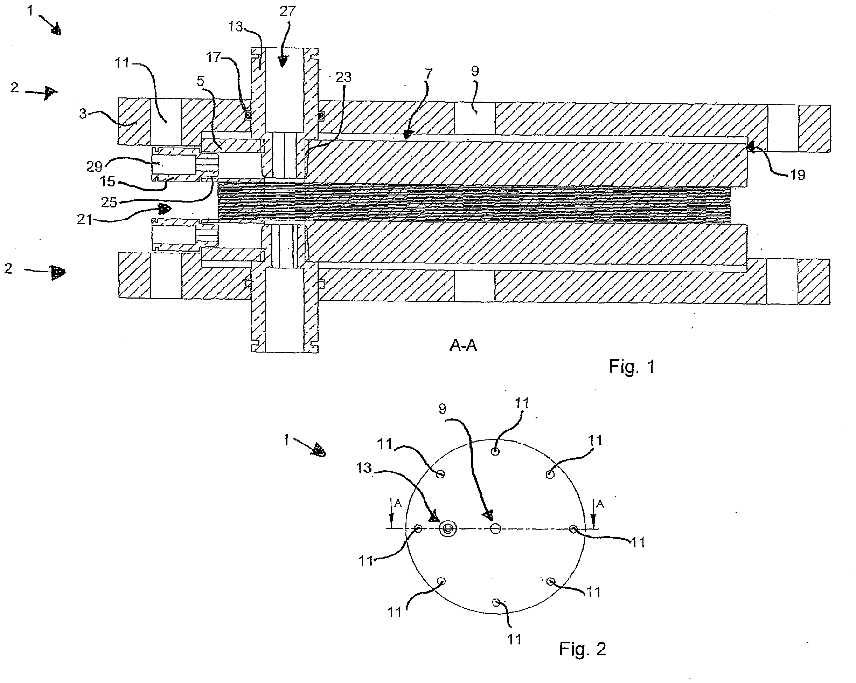

Die Figuren 1 und 2 zeigen eine erste bevorzugte Ausführungsform der erfindungsgemäßen Galvanikzelleneinheit. In der Querschnittsansicht in Figur 1 ist eine Galvanikzelleneinheit 1 dargestellt, die zwei Abschlusseinheiten 2 aufweist, welche beiderseits eines Galvanikzellenpakets 21 angeordnet sind. Die Abschlusseinheiten weisen jeweils eine äußere Deckplatte 3 auf und eine angrenzend an das Galvanikzellenpaket 21 beiderseits angeordnete Druckplatte 5. Die äußeren Deckplatten 3 weisen einen Strömungskanal 9 auf, welcher sich durch die äußere Abdeckplatte 3 hindurch erstreckt und in einen Druckraum 7 mündet, welcher als einheitlicher Raum zwischen der jeweiligen Druckplatte 5 und der jeweiligen äußeren Deckplatte 3 ausgebildet ist. Die äußere Deckplatte 3 weist jeweils entlang des Umfangs verteilt eine Mehrzahl von zylindrisch ausgebildeten Ausnehmungen 11 auf, die zum Durchführen von Befestigungsmitteln, vorzugsweise Bolzen, eingerichtet sind. Die Abschlusseinheiten 2 weisen jeweils einen Versorgungsanschluss 13 und einen Versorgungsanschluss 15 auf, welcher sich von der Druckplatte ausgehend nach außen hin erstreckt. Der Versorgungsanschluss 13 ist stirnseitig an der jeweiligen Druckplatte 5 angeordnet und in einem druckdichten Gewinde 23 in der Druckplatte 5 aufgenommen. Der Versorgungsanschluss 13 erstreckt sich vollständig durch die äußere Deckplatte 3 hindurch und ist gegen diese mit einem Dichtelement 17 abgedichtet. Der Versorgungsanschluss 13 erstreckt sich somit auch durch den Druckraum 7 hindurch. Der Versorgungsanschluss 15 ist an einer Umfangsseite der Druckplatte 5 angeordnet und in einem Gewinde 25 an der Druckplatte aufgenommen. Da der Druckraum 7 stirnseitig an der Druckplatte 5 angeordnet ist, erstreckt sich der Versorgungsanschluss 15 nicht durch den Druckraum 7 hindurch.

Es wird festgehalten, dass die Versorgungsanschlüsse 13 und 15 in der vorliegenden Figur zu Veranschaulichungszwecken dargestellt sind. In der Umsetzung wird es als bevorzugt angesehen, lediglich an einer der beiden gezeigten Stellen einen Versorgungsanschluss vorzusehen. Der Versorgungsanschluss 13 weist eine Ausnehmung 27 zum Einleiten und/oder Ausleiten von Reaktionsmaterial wie beispielsweise Brennstoff, Reduktions- oder Oxidationsmitteln auf, und der Versorgungsanschluss 15 weist eine Ausnehmung 29 zu entsprechendem Zweck auf. Die druckdichte Begrenzung des Druckraums 7 wird mittels des Dichtelements 17 und einer (nicht dargestellten) Flächendichtung 19 zwischen der Druckplatte 5 und der äußeren Deckplatte 3 gewährleistet.

In Figur 2 ist die auf den Umfang verteilte Anordnung der Ausnehmungen 11 zum Durchführen der Befestigungsmittel bzw. Spannmittel dargestellt. Weiterhin ist die Anordnung des Versorgungsanschlusses 13 und des Strömungskanals 9 dargestellt, der zur Verbindung mit einem (nicht dargestellten) Ventil ausgebildet ist.

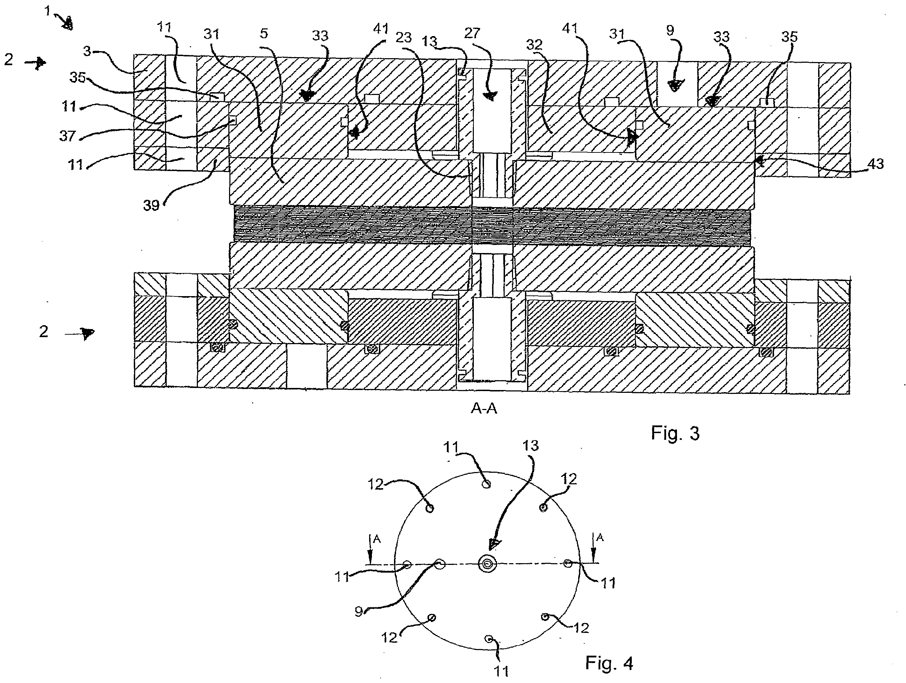

In den Figuren 3 und 4 ist eine alternative Ausführungsform der erfindungsgemäßen Galvanikzelleneinheit dargestellt. Elemente, die mit der in den Figuren 1 und 2 gezeigten Ausführungsform übereinstimmen, tragen dieselben Bezugszeichen. Die in der Querschnittsansicht in Figur 3 dargestellte Galvanikzelleneinheit 1 weist in der Querschnittsebene zwei Kolben 31 auf. Die Kolben 31 sind innerhalb der Abschlusseinheit 2 zwischen der äußeren Deckplatte 3 und der Druckplatte 5 angeordnet. Die Kolben 31 sind in einer Ausnehmung 41 einer Kolbenplatte 32 angeordnet und in Richtung des Galvanikzellenpakets bewegbar geführt. Die Kolbenplatte 32 weist entlang Ihres Umfangs Ausnehmungen 11' auf, welche in ihrer Anordnung mit den Ausnehmungen 11 der äußeren Deckplatte 3 übereinstimmen. Der Druckraum in der in Figur 3 gezeigten Ausführungsform ist in mehrere Abschnitte 33 unterteilt. Die Abschnitte 33 des Druckraums sind in nicht dargestellter Weise fluidleitend miteinander verbunden. Die Abschnitte des Druckraums sind Galvanikzellenseitig durch einen jeweiligen Kolben 31 begrenzt und mittels Dichtelementen 35 und 37 abgedichtet. Die Dichtelemente 35 sind hierbei in der äußeren Deckplatte 3 angeordnet, während die Dichtelemente 37 in einer Umfangsfläche des jeweiligen Kolbens 31 angeordnet sind.

Auf Grund der in Figur 3 gezeigten Anordnung der Kolben und Druckraum-Abschnitte erstreckt sich der Druckraum nicht im Rotations-Zentrum der Galvanikzelleneinheit. An dieser Stelle ist der Versorgungsanschluss 13 mit Ausnehmung 27 angeordnet und von der Druckplatte 5 in einem dichtenden Gewinde 23 aufgenommen. Der Versorgungsanschluss 13 weist in dieser Ausführungsform keine weitere Dichtung auf, da ein Kontakt mit dem Druckraum nicht gegeben ist.

Die Kolben 31 sind dazu eingerichtet, mittels einer Druckbeaufschlagung der Abschnitte 33 des Druckraums eine Kraft in Richtung des Galvanikzellenpakets auf die Druckplatte 5 auszuüben. Die Druckplatte 5 ist innerhalb einer Ausnehmung 43 eines zylindrisch als Ring ausgebildeten Führungskörpers 39 angeordnet. Die Druckplatte ist in Richtung des Galvanikzellenpakets geführt bewegbar. Jede der zwei Abschlusseinheiten 2 der in Figur 3 gezeigten Galvanikzelleneinheit 1 weist einen solchen Führungskörper 39 auf. Zur spielfreien und festen Montage sind die beiden Führungskörper 39 gegeneinander in nicht dargestellter Weise abgestützt. Der Führungskörper 39 weist jeweils eine Anzahl Ausnehmungen 11" zur Durchführung von Befestigungsmitteln, beispielsweise Bolzen, auf. Intermittierend sind entlang des Umfangs des Führungskörpers auch Ausnehmungen 12 vorgesehen, welche ein Gewinde beinhalten.

Die Anordnung der Ausnehmungen 11 und 12 ist in Figur 4 dargestellt. Ebenfalls dargestellt sind die Anordnung des Strömungskanals 9 auf der äußeren Deckplatte 3 sowie die Anordnung des Versorgungsanschlusses 13.

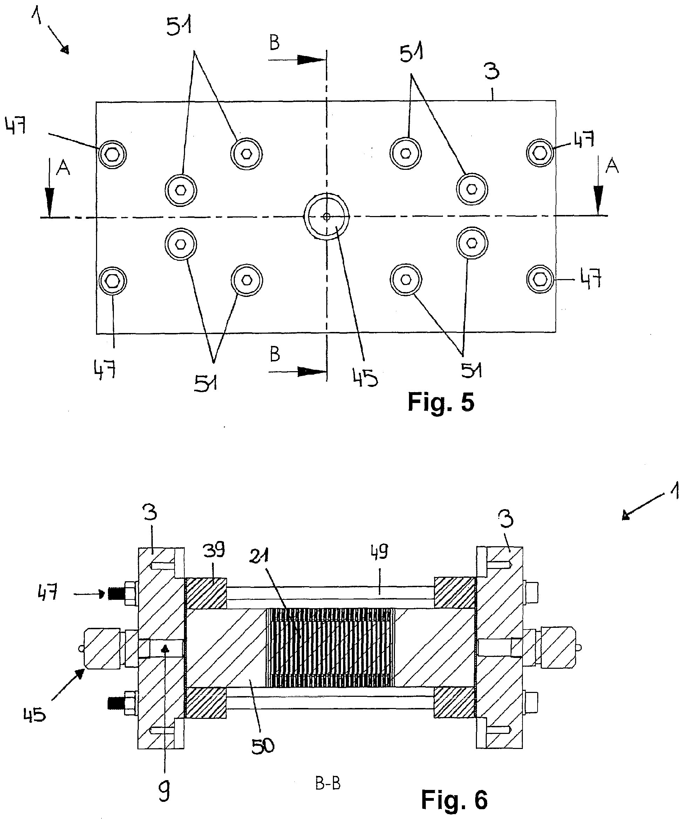

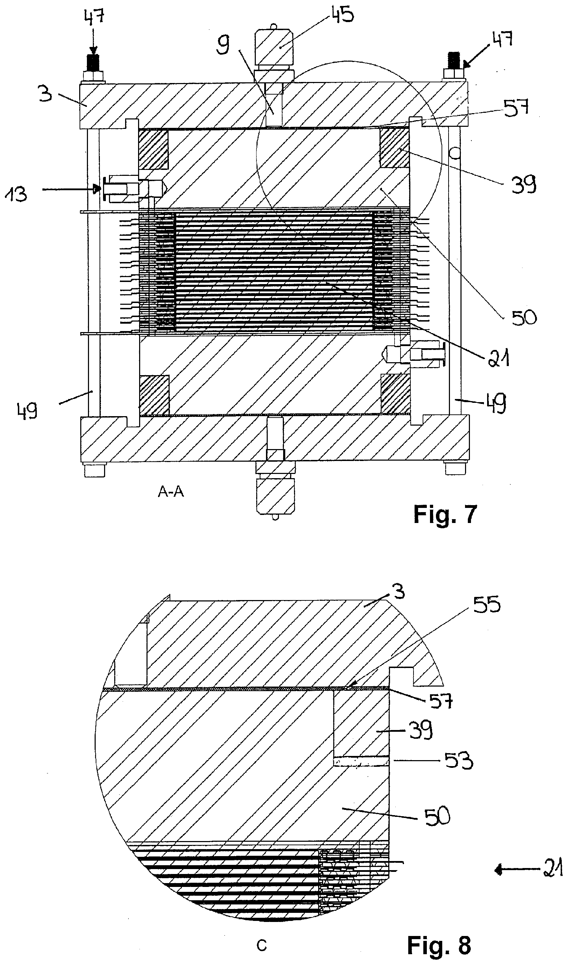

Figur 5 gibt eine seitliche Draufsicht auf eine weitere alternative Ausführungsform einer Galvanikzelleneinheit 1 wieder. Die Figuren 6 bis 8 sind Projektionsansichten dieser Darstellung, wobei Figur 8 eine Detaildarstellung zu Figur 7 ist. In Figur 5 ist zunächst der Blick auf eine von zwei Deckplatten 3 der Galvanikzelleneinheit 1 freigegeben. Die Deckplatte 3 ist rechteckig ausgebildet und weist insgesamt vier Ausnehmungen auf, durch welche sich Gewindestangen 49 (siehe Figuren 6,7) hindurch erstrecken, die sich mit Gewindeschrauben 47 in Eingriff befinden. Die Verbindung aus Gewindestange 49 und Verbindungsschraube 47 stellt ein Befestigungs- bzw. Spannmittel dar. Weiterhin sind der Deckplatte 3 mehrere Befestigungsmittel 51 zugeordnet, die vorliegend beispielhaft als Schrauben ausgebildet sind und zur Befestigung eines Führungskörpers 39 (siehe Figur 6, 7, 8) eingerichtet sind. Weiterhin ist ein mit der Deckplatte 3 verbundenes Ventil 45 dargestellt, welches an einen Strömungskanal 9 (s. Figur 6, 7) angeschlossen ist. Das Ventil 45 ist ein sogenanntes Minimess-Ventil und so konfiguriert, dass es in einem Zustand, in dem keine Leitung darangekoppelt ist, fluiddicht den Strömungskanal 9 verschließt und diesen in einem Zustand mit angeschlossener Leitung freigibt. Die Anordnung des Ventils 45 ergibt sich aus den Figuren 6 und 7.

Figur 6 ist eine Querschnittsansicht durch die Galvanikzelleneinheit 1 aus Figur 5 entlang der Schnittlinie B-B. In Figur 6 ist ergänzend zu Figur 5 dargestellt, dass angrenzend an die Deckplatte 3 jeweils ein Führungskörper 39 angeschlossen ist. Der Führungskörper ist gemäß dieser Ausführungsform als rechteckiger Hohlkörper ausgebildet. In der Mitte des Führungskörpers 39 ist jeweils ein Kolben 50 angeordnet. Gemäß des vorliegenden Ausführungsbeispiels sind die Kolben 50 aus einem Kunststoff ausgebildet. Andere Materialien, und/oder insbesondere eine weniger raumgreifende und somit dünnwandigere Ausführung sind für den Kolben 50 und ebenso für die Deckplatte 3 alternativ vorzusehen. Der Kolben 50 ist in einer Richtung senkrecht zur Deckplatte 3 beweglich innerhalb des Führungskörpers 39 geführt.

Zwischen dem Kolben 50 und der Deckplatte 3 ist eine Membran 57 angeordnet. Dies wird am Besten aus Figuren 7 und 8 ersichtlich. Die Membran 57 ist dazu eingerichtet, einen Druckraum zwischen der Deckplatte 3 und dem Kolben 50 auszubilden. Die Membran 57 ist zudem dazu ausgebildet, eine Druckbeaufschlagung des Galvanikzellenpakets 21 mittels Kraftübertragung auf den Kolben 50 zu bewirken.

Figur 7 ist eine Querschnittsansicht zu Figur 5 entlang der Schnittlinie C-C. Die in Figur 7 dargestellten Kolben 50 weisen jeweils einen seitlichen Versorgungsanschluss 13 auf, der jeweils zur Versorgung der Galvanikzelleneinheit mit Reaktionsmaterial, beispielsweise Reduktionsmittel, Oxidationsmittel oder Brennstoff eingerichtet ist.

Die Galvanikzelleneinheit 21 sowie die Kolben 50 sind wie auch die übrigen strukturellen Bauteile der Galvanikzelleneinheit 1 aus den Figuren 5 bis 8 rechteckig geformt.

Figur 8 dient zur Verdeutlichung des Zusammenspiels zwischen der Membran 57, dem Führungskörper 53 und dem Kolben 50 im Hinblick auf eine Druckbeaufschlagung des Galvanikzellenpakets 21. Die Deckplatte 3 weist jeweils einen Vorsprung 55 an ihrer galvanikzellenseitigen Stirnfläche auf. Durch Befestigen des Führungskörpers 39 an der Deckplatte 3 wird die Membran 57 flächig zwischen dem Vorsprung 55 und dem Führungskörper 39 eingeklemmt, wodurch das innerhalb des dieser Klemmfläche angeordnete Volumen zwischen Membran und Deckplatte fluiddicht abgeschlossen wird. Der Führungskörper 39 kann zu diesem Zweck insbesondere mittels mehrerer, sich durch die Membran erstreckender Schrauben mit der Deckplatte verbunden werden. In Folge der Befestigung des Führungskörpers 39 an der Deckplatte 3 wird weiterhin die Bewegung des Kolbens 50 relativ zu der Deckplatte 3 und dem Führungskörper 39 in axialer Richtung in Bezug auf die senkrecht zu den Deckplatten liegende Längsachse geführt. Bewegt sich der Kolben in Richtung auf das des Galvanikzellenpaket 21 von der Deckplatte 3 weg, so wird durch diese axiale Bewegung des Kolbens 50 relativ zu der Deckplatte 3 und dem Führungskörper 39 ein Spalt 53 zwischen einer Stirnfläche des Führungskörpers 39 und einem Absatz des Kolbens vergrößert.

Soweit im Hinblick auf die vorstehenden Figuren 1 bis 8 technische Merkmale jeweils unterschiedlichen Ausführungsbeispielen zugeordnet sind und nur im Zusammenhang mit diesen bildlich beschrieben sind, erfolgt dies aus Gründen der Übersichtlichkeit. Die technischen Merkmale der jeweiligen Ausführungsbeispiele sind grundsätzlich mit jenen Merkmalen der übrigen Ausführungsbeispiele kombinierbar.

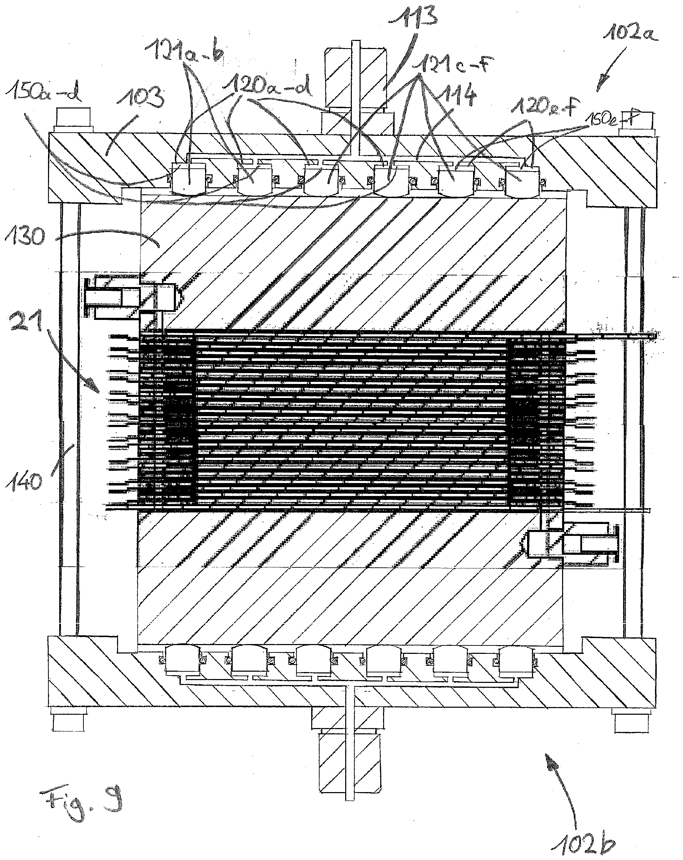

Figur 9 zeigt eine weitere alternative Ausführungsform der Erfindung. Die Ausführungsform umfasst ein Galvanikzellenpaket 21, welches zwischen zwei Abschlusseinheiten 102a, b angeordnet ist. Im Weiteren wird die Abschlusseinheit 102a näher erläutert.

Die Abschlusseinheit 102a umfasst eine äußere Deckplatte 103, welche einen zentralen Anschluss 113 zur Versorgung mit einem Druckmedium aufweist. Ausgehend von diesem zentralen Anschluss 113 erstreckt sich ein Verteilerkanal 114 durch die Deckplatte 103. Der Verteilerkanal 114 ist an mehrere Zylinderbohrungen 120a-f angeschlossen, von denen in dem dargestellten Querschnitt nach Figur 9 sechs abgebildet sind.

Jede Zylinderbohrung ist als Sacklochbohrung in der Deckplatte 103 ausgeführt und von der dem Galvanikzellenpaket zuweisenden Seite aus in die Deckplatte 103 eingebracht.

Die Deckplatte 103 ist mittels Zugankern 140 mit der entsprechenden Deckplatte der gegenüberliegenden Abschlusseinheit 102b an ihrem äußeren Umfangsbereich verbunden.

In jeder der Zylinderbohrungen 120a-f ist jeweils ein Kolben 121a-f angeordnet, welcher aus der Deckplatte 103 zur Seite des Galvanikzellenpakets hin aus der Zylinderbohrung hervorsteht.

Die hervorstehende Stirnseite jedes Kolbens 121a-f ist mit einer leichten konvexen Balligkeit ausgeführt, die in Figur 9 in überzeichneter Weise zur Verdeutlichung dargestellt ist. Mit dieser balligen Stirnseite liegt jeder der Kolben 121a-f auf einer Kraftübertragungsplatte 130 auf, die zwischen den Kolben 121a-f und dem Galvanikzellenpaket angeordnet ist. Die Kraftübertragungsplatte 130 weist einen Versorgungsanschluss für Wasserstoff oder Sauerstoff auf, mit dem Wasserstoff bzw. Sauerstoff dem Galvanikzellenpaket zugeführt werden kann.

Auf der dem Galvanikzellenpaket abgewandten Seite begrenzt jeder Kolben 121a-f einen Druckraum. Dieser Druckraum weist einen Zylinderanteil 150a-f auf und umfasst weiterhin die Verteilerleitung 114 mit einem sich durch den Druckversorgungsanschluss 113 erstreckenden Zuleitungsanteil. Die Zylinderanteile 150a-f des Druckraums stehen aufgrund der untereinander ausgebildeten Fluidverbindung unter einem übereinstimmenden Druck des Mediums, das über den Druckversorgungsanschluss 113 zugeführt wird. Durch diesen Druck werden die Kolben 121a-f auf die Kraftübertragungsplatte 130 gepresst und bewirken eine Dichtkraft auf das Galvanikzellenpaket.

Die Kolben sind mittels O-Ringen gegen die Zylinderbohrungen abgedichtet. Dabei ist zu verstehen, dass diese O-Ringen in einer Ringnut in der Zylinderbohrung angeordnet sein können, wie in Figur 9 abgebildet, oder umgekehrt an dem Kolben in einer im Kolben selbst ausgebildeten Ringnut angeordnet sein können. Die im Kolben angeordnete Ringnut ist vorzugsweise auf der dem Grund der Zylinderbohrung zugewandten Seite als radial umlaufende Nut angeordnet.

Jeder der Kolben 121a-f liegt lose auf der Kraftübertragungsplatte 130 auf. Durch diese Ausgestaltung kann die in Figur 9 abgebildete Ausführungsform eine sehr hohe Druckkraft über das Druckmedium auf die Kraftübertragungsplatte und das Galvanikzellenpaket ausüben und hierbei in Kauf nehmen, dass sich die Deckplatte 103 unter dieser Kraft nach außen wölbt. Diese Wölbung der Deckplatte bewirkt keine Änderung der homogenen Kraftaufbringung auf die Kraftübertragungsplatte durch die Kolben 121a-f, da diese Wölbung durch eine entsprechende Bewegung der Kolben und den gleichmäßigen Druck im Druckraum ausgeglichen wird. Die Deckplatte 103 kann daher in einer materialsparenden und folglich leichtgewichtigen Bauweise ausgeführt werden, ebenso wie die Kraftübertragungsplatte 130, ohne dass hierzu die gleichmäßige Einwirkung der zur Dichtung des Galvanikzellenpakets erforderlichen Presskraft beeinträchtigt wäre.

Grundsätzlich ist zu verstehen, dass die in Figur 9 abgebildete Ausgestaltung auch in solcher Weise invertiert ausgeführt werden kann, dass die Zylinderbohrungen in der vom Brennstoffzellenpaket wegweisenden Fläche der Kraftübertragungsplatte eingebracht werden können, so dass die Zylinderbohrungen in der Kraftübertragungsplatte liegen und die Kolben innerhalb dieser Zylinderbohrungen angeordnet sind. Die Deckplatte 103 weist in diesem Fall vorzugsweise keine Zylinderbohrungen auf sondern dient als Anlagefläche für eine vorzugsweise ballig ausgestaltete Stirnfläche der Kolben, die entsprechend aus den Zylinderbohrungen in der Kraftübertragungsplatte hervorstehen. Durch diese Ausgestaltung wird in noch besserer Weise ein Verklemmen der Kolben in den Zylinderbohrungen verhindert, sofern sich die Deckplatte erheblich durchbiegt und hierdurch eine Verringerung des öffnungsseitigen Durchmessers der Zylinderbohrungen auftreten würde, wenn diese in der Deckplatte angeordnet sind.

Weiterhin ist zu verstehen, dass die Abschlusseinheiten 102a, b in spiegelsymmetrischer Weise übereinstimmend ausgebildet sein können, wie dies in Figur 9 in Bezug auf eine um eine horizontale Achse spiegelsymmetrische Ausgestaltung abgebildet ist. In diesem Fall wird beidseits eine Druckbeaufschlagung durch entsprechende Druckversorgungsanschlüsse bereitgestellt. Alternativ hierzu kann aber auch eine nicht spiegelsymmetrische Ausgestaltung vorgesehen sein, bei der beispielsweise auf einer Seite die Druckkammer durch ein in sich geschlossenes Volumen dargestellt wird, welches über keinen Druckversorgungsanschluss verfügt und lediglich als reaktives Element die von der anderen Seite ausgeübte Presskraft in einer gleichmäßigen Form gegenhält.

## Patentansprüche

1. Galvanikzelleneinheit (1), mit
einem Galvanikzellenpaket (21) zur Erzeugung elektrischer Energie, welches eine Mehrzahl von aufeinandergestapelten Elektrodenblechen und Membranen aufweist, und mit
zwei Abschlusseinheiten (2), welche jeweils eine Druckplatte oder Membran (5) zur Druckbeaufschlagung des Galvanikzellenpakets (21) aufweisen und beidseitig des Galvanikzellenpakets (21) angeordnet und zur Abstützung gegenüber der jeweiligen Druckplatte aneinander befestigt sind,
einem Druckkissen zur Übertragung einer Dichtkraft auf das Galvanikzellenpaket (21) mittels einer der beiden Druckplatten oder Membranen (5), wobei das Druckkissen in der entsprechenden Abschlusseinheit, welche diese eine Druckplatte aufweist, angeordnet ist und zur Aufnahme eines druckbeaufschlagten Fluids eingerichtet ist und das Druckkissen einen Druckraum (7) zur Aufnahme des druckbeaufschlagten Fluids aufweist und die Abschlusseinheit (2) einen Strömungskanal (9) zum Einlass von druckbeaufschlagtem Fluid in den Druckraum (7) und vorzugsweise zum Auslass von druckbeaufschlagtem Fluid aus dem Druckraum (7) aufweist,
wobei der Druckraum (7) galvanikzellenseitig von mehreren Kolben (31) begrenzt und dazu eingerichtet ist, mittels Druckbeaufschlagung eine Kraft auf die mehreren Kolben (31) in Richtung des Galvanikzellenpakets (21) aufzubringen, **dadurch gekennzeichnet, dass** innerhalb der zwei Abschlusseinheiten jeweils ein Druckkissen zur Übertragung einer Dichtkraft auf das Galvanikzellenpaket (21) angeordnet ist, wobei eines der Druckkissen ein druckbeaufschlagtes Fluid beinhaltet und das andere Druckkissen nicht mit einer äußeren Druckquelle in Fluidkommunikation steht.

2. Galvanikzelleneinheit (1) nach einem der vorstehenden Ansprüche,
**dadurch gekennzeichnet, dass** die Galvanikdruckplatte (5) angrenzend an das Galvanikzellenpaket (21) angeordnet ist, und die Abschlusseinheit (2) eine äußere Deckplatte (3) aufweist, wobei der Druckraum (7) zwischen der Druckplatte (5) und der äußeren Deckplatte (3) angeordnet und mittels Dichtelementen (17, 19, 35, 37) abgedichtet ist.

3. Galvanikzelleneinheit (1) nach einem der vorstehenden Ansprüche,
**gekennzeichnet durch** einen Förderkreislauf zur Zirkulation des druckbeaufschlagten Fluids durch den Druckraum (7) hindurch, wobei in dem Förderkreislauf vorzugsweise Mittel zur Kühlung und/oder Heizung des druckbeaufschlagten Fluids vorgesehen sind.

4. Galvanikzelleneinheit (1) nach einem der vorstehenden Ansprüche,
**dadurch gekennzeichnet, dass** die Druckplatte (5) einen oder mehrere Versorgungsanschlüsse (13, 15) zur Versorgung der Galvanikzelleneinheit (1) mit Reaktionsmaterial, beispielsweise Reduktionsmittel, Oxidationsmittel oder Brennstoff aufweist.

5. Galvanikzelleneinheit (1) nach einem der vorstehenden Ansprüche,
**dadurch gekennzeichnet, dass** der Druckraum (7) galvanikzellenseitig von der Druckplatte (5) begrenzt und dazu eingerichtet ist, mittels Druckbeaufschlagung eine Kraft auf die Druckplatte (5) in Richtung des Galvanikzellenpakets (21) aufzubringen.

6. Galvanikzelleneinheit (1) nach einem der vorstehenden Ansprüche,
**dadurch gekennzeichnet, dass** vorzugsweise der Druckraum (7) mehrere den Kolben (31) zugeordnete Abschnitte (33) aufweist, die fluidleitend miteinander verbunden sind und dass weiter vorzugsweise die mehreren Kolben (31) innerhalb korrespondierender Ausnehmungen der äußeren Deckplatte (3) angeordnet sind.

7. Galvanikzelleneinheit (1) nach einem der vorstehenden Ansprüche,
**dadurch gekennzeichnet, dass** jeder der mehreren Kolben (31) lose auf einer Druckübertragungsplatte aufliegt, die zwischen dem Galvanikzellenpaket und den Kolben angeordnet ist oder dass jeder der mehreren Kolben innerhalb einer auf dem Galvanikzellenpaket aufliegenden Druckübertragungsplatte angeordnet sind und lose auf einer Deckplatte aufliegen, die in Bezug auf die Druckübertragungsplatte gegenüberliegend zum Galvanikzellenpaket angeordnet ist.

8. Galvanikzelleneinheit (1) nach einem der vorstehenden Ansprüche,
**dadurch gekennzeichnet, dass** den zwei Abschlusseinheiten (2) ein vorzugsweise zylindrisch ausgebildeter Führungskörper zugeordnet ist, innerhalb dessen die Druckplatte (5) der jeweiligen Abschlusseinheit (2) geführt beweglich angeordnet ist.

9. Galvanikzelleneinheit (1) nach einem der vorstehenden Ansprüche,
**dadurch gekennzeichnet, dass** in die Druckplatte (5) und/oder in die Deckplatte (3) ein oder mehrere Medienleitungen eingebracht sind, welche zur Durchleitung eines Kühl- und/oder Heizmediums ausgebildet sind.

10. Galvanikzelleneinheit nach einem der vorstehenden Ansprüche,
**dadurch gekennzeichnet, dass** die aneinander befestigten Abschlusseinheiten mittels einer Spannkraft miteinander verspannt sind, wobei die Spannkraft mittels einer Druckänderung des druckbeaufschlagten Fluids einstellbar ist.

11. Galvanikzelleneinheit nach einem der vorhergehenden Ansprüche,
**dadurch gekennzeichnet, dass** ein Druckregelventil fluidleitend mit dem Druckkissen verbunden ist, vorzugsweise in dem Strömungskanal oder dem Förderkreislauf angeordnet ist, und das Druckregelventil zur Minderung und/oder Erhöhung des Drucks innerhalb des Druckkissens, insbesondere des Druckraums (7) wirkt.

## Claims

1. Galvanic cell unit (1), comprising
a galvanic cell package (21) for generating electrical energy, which has a plurality of sheet electrodes and membranes stacked on top of one another, and comprising
two end units (2), which each have a pressure plate or membrane (5) for pressurising the galvanic cell package (21) and which are arranged on either side of the galvanic cell package (21) and fixed to one another for bracing with respect to the associated pressure plates,
a pressure cushion for transmitting a sealing force to the galvanic cell package (21) by means of one of the two pressure plates or membranes (5), the pressure cushion being arranged in the corresponding end unit which has this one of the pressure plates and being set up to receive a pressurised fluid, and the pressure cushion having a pressure chamber (7) for receiving the pressurised fluid, and the end unit (2) having a flow duct (9) for admitting pressurised fluid into the pressure chamber (7) and preferably for discharging pressurised fluid from the pressure chamber (7),
the pressure chamber (7) being delimited on the galvanic cell side by a plurality of pistons (31) and being set up to apply a force to the plurality of pistons (31) towards the galvanic cell package (21) by means of pressurisation,
**characterised in that** a pressure cushion for transmitting a sealing force to the galvanic cell package (21) is arranged within each of the two end units, one of the pressure cushions containing a pressurised fluid and the other pressure cushion not being in fluid communication with an external pressure source.

2. Galvanic cell unit (1) according to any of the preceding claims,
**characterised in that** the galvanic pressure plate (5) is arranged adjacent to the galvanic cell package (21), and the end unit (2) has an external cover plate (3), the pressure chamber (7) being arranged between the pressure plate (5) and the external cover plate (3) and being sealed off by means of sealing elements (17, 19, 35, 37).

3. Galvanic cell unit (1) according to any of the preceding claims,
**characterised by** a conveyor circuit for circulating the pressurised fluid through the pressure chamber (7), means for cooling and/or heating the pressurised fluid preferably being provided in the conveyor circuit.

4. Galvanic cell unit (1) according to any of the preceding claims,
**characterised in that** the pressure plate (5) has one or more supply terminals (13, 15) for supplying the galvanic cell unit (1) with reaction material, for example reducing agent, oxidising agent or fuel.

5. Galvanic cell unit (1) according to any of the preceding claims,
**characterised in that** the pressure chamber (7) is delimited on the galvanic cell side by the pressure plate (5) and is set up to apply a force to the pressure plate (5) towards the galvanic cell package (21) by means of pressurisation.

6. Galvanic cell unit (1) according to any of the preceding claims,
**characterised in that** the pressure chamber (7) preferably has a plurality of portions (33) assigned to the pistons (31), said portions being interconnected in a fluid-conducting manner, and **in that** the plurality of pistons (31) are preferably further arranged within corresponding recesses in the external cover plate (3).

7. Galvanic cell unit (1) according to any of the preceding claims, **characterised in that** each of the plurality of pistons (31) is positioned loosely on a pressure transmission plate which is arranged between the galvanic cell package and the pistons, or **in that** each of the plurality of pistons is arranged within a pressure transmission plate positioned on the galvanic cell package and is positioned loosely on a cover plate which is arranged opposite the galvanic cell package with respect to the pressure transmission plate.

8. Galvanic cell unit (1) according to any of the preceding claims,
**characterised in that** a preferably cylindrically formed guide body, within which the pressure plate (5) of the associated end unit (2) is arranged so as to be movable in a guided manner, is assigned to the two end units (2).

9. Galvanic cell unit (1) according to any of the preceding claims,
**characterised in that** one or more media lines, formed for a cooling and/or heating medium to pass through, are introduced into the pressure plate (5) and/or into the cover plate (3).

10. Galvanic cell unit according to any of the preceding claims,
**characterised in that** the end units which are fixed to one another are gripped together by means of a clamping force, the clamping force being adjustable by means of a change in pressure in the pressurised fluid.

11. Galvanic cell unit according to any of the preceding claims,
**characterised in that** a pressure control valve is connected to the pressure cushion in a fluid-conducting manner, preferably being arranged in the flow duct or the conveyor circuit, and the pressure control valve acts to reduce and/or increase the pressure within the pressure cushion, in particular the pressure chamber (7).

## Revendications

1. Unité de cellules galvaniques (1), comprenant un paquet de cellules galvaniques (21) servant à générer une énergie électrique, lequel présente une pluralité de plaques d'électrodes empilées les unes sur les autres et des membranes, et comprenant
deux unités terminales (2), qui présentent respectivement une plaque de pression ou une membrane (5) servant à soumettre le paquet de cellules galvaniques (21) à l'action d'une pression et qui sont disposées de part et d'autre du paquet de cellules galvaniques (21) et sont fixées les unes au niveau des autres par rapport à la plaque de pression respective aux fins de l'appui,
un coussin de pression servant à transmettre une force de colmatage sur le paquet de cellules galvaniques (21) au moyen d'une des deux plaques de pression ou membranes (5), dans laquelle le coussin de pression est disposé dans l'unité terminale correspondante, qui présente ladite plaque de pression, et est mis au point pour recevoir un fluide soumis à l'action d'une pression et le coussin de pression présente un espace de pression (7) servant à recevoir le fluide soumis à l'action d'une pression et l'unité terminale (2) présente un canal d'écoulement (9) servant à l'admission du fluide soumis à l'action d'une pression dans l'espace de pression (7) et de préférence servant à l'évacuation du fluide soumis à l'action d'une pression hors de l'espace de pression (7),
dans laquelle l'espace de pression (7) est délimité du côté des cellules galvaniques par plusieurs pistons (31) et est mis au point afin d'appliquer au moyen de l'application de pression une force sur les plusieurs pistons (31) en direction du paquet de cellules galvaniques (21),
**caractérisée en ce que** respectivement un coussin de pression servant à transmettre une force de colmatage sur le paquet de cellules galvaniques (21) est disposé à l'intérieur des deux unités terminales, dans laquelle un des coussins de pression contient un fluide soumis à l'action d'une pression et l'autre coussin de pression n'est pas en communication fluidique avec une source de pression extérieure.

2. Unité de cellules galvaniques (1) selon l'une quelconque des revendications précédentes,
**caractérisée en ce que** la plaque de pression galvanique (5) est disposée de manière contiguë au paquet de cellules galvaniques (21), et l'unité terminale (2) présente une plaque de recouvrement (3) extérieure, dans laquelle l'espace de pression (7) est disposé entre la plaque de pression (5) et la plaque de recouvrement (3) extérieure et est étanchéifié au moyen d'éléments d'étanchéité (17, 19, 35, 37).

3. Unité de cellules galvaniques (1) selon l'une quelconque des revendications précédentes,
**caractérisée par** un circuit de refoulement servant à faire circuler le fluide soumis à l'action d'une pression à travers l'espace de pression (7), dans laquelle de préférence des moyens servant à refroidir et/ou à chauffer le fluide soumis à l'action d'une pression sont prévus dans le circuit de refoulement.

4. Unité de cellules galvaniques (1) selon l'une quelconque des revendications précédentes,
**caractérisée en ce que** la plaque de pression (5) présente un ou plusieurs raccords d'alimentation (13, 15) servant à l'alimentation de l'unité de cellules galvaniques (1) en matériau de réaction, par exemple en agent de réduction, en agent d'oxydation ou en combustible.

5. Unité de cellules galvaniques (1) selon l'une quelconque des revendications précédentes,
**caractérisée en ce que** l'espace de pression (7) est délimité du côté des cellules galvaniques par la plaque de pression (5) et est mis au point afin d'appliquer au moyen de l'application de pression une force sur la plaque de pression (5) en direction du paquet de cellules galvaniques (21).

6. Unité de cellules galvaniques (1) selon l'une quelconque des revendications précédentes,
**caractérisée en ce que** de préférence l'espace de pression (7) présente plusieurs sections (33) associées aux pistons (31), lesquelles sont reliées les unes aux autres de manière à acheminer le fluide, et que du reste les plusieurs pistons (31) sont de préférence disposés à l'intérieur d'évidements correspondants de la plaque de recouvrement (3) extérieure.

7. Unité de cellules galvaniques (1) selon l'une quelconque des revendications précédentes,
**caractérisée en ce que** chacun des plusieurs pistons (31) repose de manière lâche sur une plaque de transmission de pression, qui est disposée entre le paquet de cellules galvaniques et les pistons, ou que chacun des plusieurs pistons est disposé à l'intérieur d'une plaque de transmission de pression reposant sur le paquet de cellules galvaniques et repose de manière lâche sur une plaque de recouvrement, qui, par rapport à la plaque de transmission de pression, est disposée de manière à faire face au paquet de cellules galvaniques.

8. Unité de cellules galvaniques (1) selon l'une quelconque des revendications précédentes,
**caractérisée en ce qu'**un corps de guidage réalisé de préférence de manière cylindrique est associé aux deux unités terminales (2), à l'intérieur duquel la plaque de pression (5) de l'unité terminale (2) respective est disposée de manière mobile et guidée.

9. Unité de cellules galvaniques (1) selon l'une quelconque des revendications précédentes,
**caractérisée en ce que** sont introduits, dans la plaque de pression (5) et/ou dans la plaque de recouvrement (3), un ou plusieurs conduits de milieu, qui sont réalisés afin d'acheminer un milieu de refroidissement et/ou de chauffage.

10. Unité de cellules galvaniques selon l'une quelconque des revendications précédentes,
**caractérisée en ce que** les unités terminales fixées les unes au niveau des autres sont assemblées par serrage les unes aux autres au moyen d'une force de serrage, dans laquelle la force de serrage peut être réglée au moyen d'une modification de pression du fluide soumis à l'action d'une pression.

11. Unité de cellules galvaniques selon l'une quelconque des revendications précédentes,
**caractérisée en ce qu'**une soupape de régulation de pression est reliée, de manière à acheminer un fluide, au coussin de pression, de préférence est disposée dans le canal d'écoulement ou dans le circuit de refoulement, et la soupape de régulation de pression agit afin de réduire et/ou d'augmenter la pression à l'intérieur du coussin de pression, en particulier de l'espace de pression (7).
